# EUROPÄISCHE PATENTANMELDUNG

(11) **EP 1 156 656 A2**
(43) Veröffentlichungstag der Anmeldung: **21.11.2001**
(21) Anmeldenummer: 01111262.0
(22) Anmeldetag: 16.05.2001
(51) Int. Cl.: H04N 1/00

(54) **Vorrichtung und Verfahren zur interaktiven erneuten Wiedergabe eines Dokumentes auf einem Druckträger ohne erneutes Scannen**

(30) Priorität: 17.05.2000 US 572478
(71) Anmelder: Heidelberger Druckmaschinen Aktiengesellschaft, 69115 Heidelberg (DE)
(72) Erfinder: Hansen, David Robert, Honeoye Falls, NY 14472 (US); DeYoung, Jennifer, Fairport, NY 14450 (US); Swinarski, Michael D., Batavia, NY 14020 (US)
(74) Vertreter: Franzen, Peter

(57) **Zusammenfassung**

Ein Verfahren und eine Vorrichtung zum Scannen einer Seite mit verschiedenen Bildattributen auf verschiedenen Bereichen der Seite umfasst einen Scanner (100) mit einem eingebauten Bildzwischenspeicher (104) und einem Scannerschaltkreis (106) mit einer Vielzahl von Scanalgorithmen (106A-106C). Der Scanner (100) scannt ein Bild und speichert dieses im Zwischenspeicher. Selektiv gekennzeichnete Bereiche einer Seite werden entsprechend zugewiesenen Algorithmen (106A-106C) innerhalb des Scannerschaltkreises (106) bearbeitet, indem die zugewiesenen Algorithmen (106A-106C) in den gekennzeichneten Bereichen angewandt werden.

Der Scanner (100) stellt ein Bild aus den in dem eingebauten Bildzwischenspeicher (104) gespeicherten Daten dar.

## Beschreibung

Die vorliegende Erfindung betrifft eine Vorrichtung und ein Verfahren zur interaktiven erneuten Wiedergabe eines Dokumentes auf einem Druckträger ohne erneutes Scannen gemäß dem Oberbegriff der Ansprüche 1 und 5.

Die Produktion von Dokumenten in hoher Auflage und mit Nachbearbeitung wird allgemein als Hochleistungs- oder Auflagendruckproduktion bezeichnet. Ein Hochleistungs-oder Auflagendrucker ist eine Druckvorrichtung, die zur schnellen Produktion von Dokumenten in hoher Auflage geeignet ist. Diese Drucker haben in der Regel eine hohe Kapazität in der Handhabung von Papier und bieten die Möglichkeit, verschiedene Arten von Daten aus verschiedenen Quellen zu verarbeiten und die Dokumente nach dem Druckvorgang weiter zu bearbeiten, z.B. zu binden. Trotz des hohen Automatisierungsgrads von Hochleistungsdruckern und der weiten Verbreitung der Computertechnologie, insbesondere im Bereich des Desktop Publishings ist der Auflagendruck immer noch ein komplexer Prozess, der auch manuelle Schritte einschließt.

Der Hochleistungsdruck beinhaltet andere komplizierte Prozesse, die die Produktionseffizienz beeinflussen. In Druckereien, die Aufträge elektronisch bearbeiten, muss bei Auftragseingang der Auftrag in das elektronische Produktionssystem der Druckerei eingegeben werden. Bei Dokumenten, die vom Kunden auf Papier in die Druckerei gebracht werden, müssen die Dokumente zunächst elektronisch in das Rechnersystem der Druckerei eingescannt werden. Solche Dokumente werden üblicherweise anhand eines Hochleistungsscanners gescannt.

In einem typischen Scanvorgang beim Hochleistungsscannen wird ein großer Stapel von Originalen in ein Eingabemagazin des Hochleistungsscanners gelegt. Der Bediener stellt dann eine paar Attribute für den Scanner ein, die die Beschaffenheit des Stapels mit den Originalen definieren, und drückt den Startknopf. Der Scanvorgang ist abgeschlossen, wenn der letzte Bogen eingescannt ist.

In manchen Fällen ist es wichtig, einige der Seiten in dem Stapel mit Originalen besonders sorgfältig zu behandeln, weil sie fotografischen Inhalt oder Bildinhalt aufweisen, der mit speziellen Attributen eingescannt werden sollte. Das Scannen dieser Seiten braucht üblicherweise mehrere Versuche, um die Attribute einzubinden, um bei diesen speziellen Seiten die beste Bildqualität zu erhalten. Bei den vielen Versuchen führen die Scanner mehrere Scans desselben Bogen durch. Es kann sein, dass der Bogen bei mehreren Scanvorgängen manuell auf dem Auflageglas platziert werden muss, was den großen Stapel mit Originalen durcheinanderbringt. Alternativ muss der Bogen, wenn der Scanner kein Auflageglas aufweist, manuell von dem Ausgabemagazin in das Eingabemagazin zurückgelegt werden, damit ein weiterer Scanvorgang durchgeführt werden kann. Wenn eine Seite mit einem komplexen Datensatz vorliegt, die z.B. einigen Text, einige Graphiken und eine Fotografie enthält, muss der Bediener einen anderen Scanalgorithmus auf jedes einzelne Element anwenden. Verschiedene Scanalgorithmen sind für verschiedene Aufgaben besser geeignet. Ein Algorithmus kann z.B. zum Scannen von Text besser geeignet sein, und ein anderer Algorithmus zum Scannen von Graphiken. Dies verkompliziert die ohnehin schon schwierige Aufgabe, eine optimale Bildqualität zu erzeugen noch mehr.

Einige Vorrichtungen aus dem Stand der Technik benutzen verschiedene Algorithmen für verschiedene Aufgaben. Einige erhältliche Vorrichtungen versuchen, diese Eigenschaften mittels Software zur Verfügung zu stellen. Eine Softwarevorrichtung führt jedoch zu einer langsameren Produktion. Des weiteren ist die Software nicht auf den speziellen Scanner oder Drucker zugeschnitten, der bei dem Prozess verwendet werden soll. Eine weitere Vorrichtung, die von Kofax Inc. erhältlich ist, heißt "VirtualReScan". Diese Vorrichtung versucht das Softwareproblem anzugehen, indem sie eine externe Karte mit verschiedenen Algorithmen verwendet. Diese Vorrichtung hat jedoch den Nachteil, dass die Algorithmen auf der Karte ebenfalls nicht auf einen speziellen Scanner oder Drucker zugeschnitten sind.

Der Erfindung liegt demgemäss die Aufgabe zu Grunde, einen Scanner mit interaktiven Eigenschaften zum Scannen von Dokumenten, die Seiten mit komplexen Daten umfassen, zu schaffen.

Die Aufgabe wird erfindungsgemäß durch eine Vorrichtung mit den Merkmalen des Anspruchs 1 und einem Verfahren mit den Merkmalen des Anspruchs 6 gelöst. Weitere Merkmale sind in den Unteransprüchen enthalten.

Die Erfindung schafft ein Verfahren und eine Vorrichtung zum Scannen einer Seite mit verschiedenen Bildattributen auf verschiedenen Bereichen der Seite. Das Verfahren und die Vorrichtung benutzen einen Scanner mit einem eingebauten Bildzwischenspeicher und einem Scannerschaltkreis, der eine Vielzahl von Scanalgorithmen mit optimalen Kennzeichen zum Wiedergeben von Bildern mit einer Vielzahl von verschiedenen Bildattributen aufweist. Der Scanner scannt die Seite, und ein Bild der Seite wird auf einem Display angezeigt. Der Bediener benutzt eine Eingabevorrichtung um einen Bereich der Seite auf dem Display zu kennzeichnen bzw. markieren. Die Daten von der gescannten Seite werden in einem Zwischenspeicher, welcher in den Scanner eingebaut ist, gespeichert, bevor die Daten dargestellt werden. Der Bediener benennt auch einen ausgewählten Algorithmus der verfügbaren Algorithmen, der auf den bezeichneten Bereich angewendet werden soll. Der Scanner wendet den bezeichneten Algorithmus auf die in dem im Scanner eingebauten Zwischenspeicher für diesen Bereich gespeicherten Daten an. Der Scanner stellt ein Bild der in dem eingebauten Bildzwischenspeicher gespeicherten Daten dar.

Die Erfindung wird nachfolgend mit Bezug auf die Zeichnung anhand bevorzugter Ausführungsformen beschrieben.

### In den Zeichnungen zeigen:

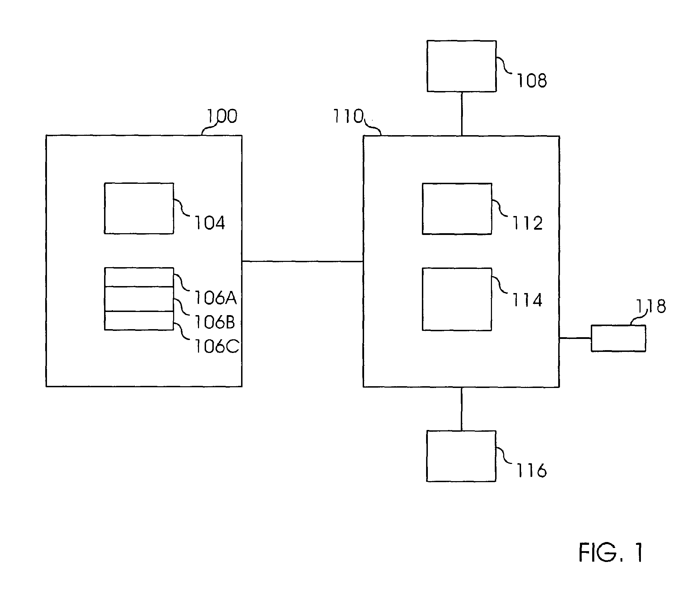

Fig. 1 eine bevorzugte Ausführungsform der erfindungsgemäßen Scannervorrichtung.

Fig. 1 zeigt eine bevorzugte Ausführungsform der erfindungsgemäßen Scannervorrichtung. In dieser Ausführungsform ist ein Scanner 100 vorgesehen, der mit einer Workstation 110 verbunden ist. Der Scanner 100 umfasst einen Zwischenspeicher, der in dem Scanner 100 angeordnet ist. In einer Ausführungsform, in der die Scannerauflösung 600x600 dpi beträgt, ist der eingebaute Zwischenspeicher vorzugsweise ein 8-Bit-Zwischenspeicher, d.h. das 8 Bit Daten pro dot/Punkt gespeichert werden. Der Scanner umfasst einen Schaltkreis 106, der eine Vielzahl von Scanalgorithmen 106A, 106B und 106C zur Verfügung stellen kann. Der Scanneralgorithmus 106A kann z.B. für das Scannen eines Textes optimiert sein, der Scanneralgorithmus 106B für das Scannen von Graphiken, und der Scanneralgorithmus 106C kann für das Scannen von Fotografien optimiert sein. Der Fachmann weiß, dass Scanalgorithmen für andere Arten von Seitenattributen auch in dieser Erfindung Verwendung finden können. Der Scanner 106 weist insbesondere die Algorithmen 106A-106C auf, die für verschiedene Bildattribute (Text, Graphiken, Schwarzweißfotografien, Farbfotografien usw.) optimiert sind. Jeder dieser Algorithmen schafft eine optimale Bildqualität beim Scannen der verschiedenen Bildattribute.

Mit dem Scanner 100 ist eine Workstation 110 verbunden, welche wiederum mit einem Display 108 und einem Drucker 116 verbunden ist. Eine Eingabevorrichtung 118, z.B. eine Tastatur, eine Maus oder ein Trackball, ist ebenfalls mit der Workstation 110 verbunden. Der Desktop umfasst einen geeigneten Treiber, der die Daten aufnimmt und eine Schnittstelle mit der Workstation 110 aufweist. Damit Dokumente in Papierform mittels eines Scanners eingelesen werden können, kann ein Treiber von TWAIN mit Sitz in Boulder Creek, Kalifornien, verwendet werden. Vorzugsweise umfasst die Workstation 110 auch Software, die ein Anschauen des von dem Scanner 100 gescannten Bildes ermöglicht. Ein geeignetes Bildsoftwarepacket ist von Heidelberg Digital mit Sitz in Rochester, New York als Bildvorschausoftware erhältlich. Diese Software ermöglicht das interaktive Scannen des Dokuments durch einen Bediener.

Beim Betrieb wird eine Seite (ein Dokument) auf dem Auflageglas des Scanners 100 gelegt, was sowohl automatisch als auch manuell geschehen kann. Der Scanner scannt die Seite, um digitale Daten, die ein Bild ergeben, zu erzeugen. Wie bereits erörtert, wird bei der bevorzugten Ausführungsform mit 600 dpi das Bild in einem 8-Bit-Zwischenspeicher gespeichert. Die Daten werden in dem Zwischenspeicher gespeichert, bevor sie dargestellt werden. Das bedeutet, die Daten werden im 8-Bit-Format gespeichert, also 256 Abstufungen pro dot/Punkt oder gescanntem Pixel. Der Bediener benutzt dann die Vorschausoftware 112, um ein Bild der Seite von den Daten auf dem Display 108 zu erzeugen. Die Bildvorschausoftware 112 liefert das Bild in Falschfarbendarstellung oder 1-Bit-Format und formatiert die Daten neu, so dass ein Bild auf dem Display erzeugt werden kann. Ist das Bild auf dem Display 108, so kann der Bediener die Seite untersuchen und entscheiden, ob es bestimmte Bereiche auf einer Seite gibt, die spezielle Darstellungsalgorithmen erforderlich machen. Weist eine Seite z.B. Text und eine Fotografie auf einem Teil der Seite auf, wird das Scannen einer Fotografie optimiert, indem ein Algorithmus, der besonders für Fotografien geeignet ist, verwandt wird, während der Text unter Verwendung eines anderen Algorithmus, der speziell für Text optimiert ist, gescannt wird. Der Bediener kann die Eingabevorrichtung 118 dazu benutzen, einen bestimmten Bereich zu kennzeichnen/markieren, wie z.B. ein Fenster um einen bestimmten Teil der Seite. Der Bediener benutzt dann die Eingabevorrichtung, um einen bestimmten Algorithmus zu benennen, der mit dem bezeichneten Bereich verwandt wird. Vorzugsweise werden die Zonen auf dem Display 108 durch die Verwendung eines Fensters sichtbar gemacht. Nachdem der Scanner 100 geeignete Anweisungen von der Workstation bekommen hat, erhält er dann die Daten, die in 8-Bit-Format in dem Zwischenspeicher 104 liegen und wendet den bezeichneten Algorithmus auf das Bild in dem Fenster oder dem Bereich an, der von dem Bediener benannt wurde.

Das dargestellte Bild der Seite, bei dem alle benannten Algorithmen auf alle gekennzeichneten Bereiche auf der Seite angewandt worden sind, wird dann an die Workstation gesandt und auf dem Drucker 116 ausgedruckt. Vorzugsweise sind die Algorithmen 106A-C speziell für den Gebrauch in dem Scanner 100 zugeschnitten, der besondere optische und elektronische Eigenschaften aufweisen kann, die berücksichtigt werden müssen. Ebenso sind die Scanalgorithmen 106A -106C vorzugsweise auf einen speziellen Drucker 116 zugeschnitten, so dass eine spezielle Abstimmung 116 optimierte Scannereigenschaften liefert.

Die erfindungsgemäße Vorrichtung und das Verfahren weisen mehrere Vorteile auf. Durch den Gebrauch des Scannerdatenzwischenspeichers 104, der in dem erfindungsgemäßen Scanner angeordnet ist, und den Gebrauch der Bildvorschausoftware 112 in dem Treiber 114 von TWAIN, kann das manuelle Plazieren und Bewegen der Bogen entfallen und ein Durcheinanderbringen des Ausgangspapierstapels verhindert werden, wenn die "besonderen Seiten" bearbeitet werden. Zusätzlich ermöglicht die Bildvorschausoftware 112 ein Identifizieren der Bereiche auf der Seite, die mit ihren eigenen Bildattributeinstellungen gescannt werden können, ohne die Bearbeitung der Bogen zu beeinträchtigen.

Der Bediener kann die Bogen markieren, die ein spezielles Scannen benötigen, indem er einen Erkennungsbogen verwendet (einen besonderen Bogen, der von dem Scanner in einem Stapel von Originalen erkannt wird), ihn auf das Auflageglas legt, den Bogen in den Einzug legt, oder den Originalstapel aufteilt und die einzelnen Teile des Originalstapels einen nach dem anderen in einen Eingabestromeinzug legt, bis der gesamte Stapel eingescannt ist. In diesem Fall würde ein Teil des Originalstapels ein spezieller Bogen sein, der interaktives Scannen erforderlich macht. Sobald der spezielle Bogen identifiziert worden ist, wird der Scanner 100 benachrichtigt, so dass er die Seite scannt und eine 8-Bit-Version der Daten in seinem Datenzwischenspeicher 104 aufbewahrt. Diese Daten werden an eine Bildvorschausoftware 112 in einer 1 Bit Version auf der Grundlage der aktuellen Scanattribute weitergegeben. Die Bildvorschausoftware 112 ermöglicht nun dem Operator, Bereiche in dem Bild zu identifizieren, spezielle Scanattribute für den oder die Bereiche festzusetzen und dann eine erneute Wiedergabe des Bildes entsprechend dem geeigneten Algorithmus anzufordern. Die Bildvorschausoftware fordert dargestellte Daten für jeden Bereich (einschließlich der Hintergrundseite als einem Bereich) von dem Datenzwischenspeicher 104 an. Die Bildvorschausoftware 112 setzt das resultierende Bild aus den vielen Bereich zusammen und zeigt das Ergebnis an. Der Bediener kann das wiederholen und das aktuell angezeigten Bild und dessen Bereiche weiter verändern , indem er die Scannerattribute für einen Bereich erneut verändert oder Bereiche hinzufügt oder löscht. Sobald das beste Gesamtbild erreicht ist, kann der Bediener mit dem Scannen des restlichen Originalstapels fortfahren (der eine andere spezielle Seite sein kann). Mit dem erfindungsgemäßen Vorrichtung und Verfahren muss der Bediener die Originalbogen, verglichen mit herkömmlichen Hochleistungsscannervorrichtungen, nicht mehr so oft (oder überhaupt nicht mehr) manuell bewegen. Der Bediener kann spezielle Scannerattribute auf die Bereiche innerhalb einer Seite sowie für die ganze Seite anwenden. Die Scannervorrichtung ist nicht mechanisch für jeden Scanvorgang (erneute Wiedergabe) in Gebrauch, somit können keine Fehler durch eine Veränderung der Position des Bogens mit Hinsicht auf die Scannervorrichtung auftreten.

Im Unterschied zu Vorrichtungen nach dem Stand der Technik, die Software benutzen, um die Algorithmen zur Verfügung zu stellen, die für die verschiedenen Bildattribute optimiert sind, sind in der vorliegenden Vorrichtung die verschiedenen Scanalgorithmen direkt im Scanner 110 angeordnet. Daher arbeitet die vorliegende Erfindung mit einer viel höheren Geschwindigkeit als die Vorrichtungen nach dem Stand der Technik. Des weiteren sieht die vorliegende Erfindung die Scanalgorithmen direkt in dem Scanner vor. Die Algorithmen, die vorgesehen sind, sind für den speziellen Scanner abgestimmt. Daher ist das Scannen optimiert, weil diese abgestimmten Algorithmen verwendet werden.

### Liste der Bezugszeichen

- 100: Scanner
- 104: eingebauter Zwischenspeicher
- 106: Scannerschaltkreis
- 106A, 106B, 106C: Scanalgorithmen
- 108: Display
- 110: Workstation
- 112: Bildvorschausoftware
- 114: Treiber
- 116: Abstimmung
- 118: Eingabevorrichtung

## Patentansprüche

1. Vorrichtung zum Scannen einer Seite mit verschiedenen Bildattributen auf verschiedenen Bereichen der Seite, wobei die Vorrichtung die folgenden Komponenten umfasst:
A) einen Scanner (100) zum Scannen einer Seite mit einem eingebauten Bildzwischenspeicher (104);
einen Scannerschaltkreis (106) mit einer Vielzahl von Scanalgorithmen (106A-106C), die optimale Darstellungskennzeichen für die Wiedergabe von Bildern mit einer Vielzahl von verschiedenen Bildattributen aufweisen, wobei, wenn ein Bild in einem Bereich gescannt wird, um Bilddaten zu erzeugen, die Bilddaten in dem eingebauten Bildzwischenspeicher (104) gespeichert werden, bevor diese Bilddaten dargestellt werden;
eine Logikeinheit zum Darstellen eines Bildes aus diesen Bilddaten;
B) eine Workstation (110), die einen Display (108), einen Prozessor und eine Eingabevorrichtung (118) aufweist, wobei der Prozessor eine Logikeinheit aufweist, die so eingestellt ist, dass sie
1) die dargestellten Bilddaten aufnimmt und die Daten für den Display (108) erneut formatiert,
2) einen Bereich der Seite auf dem Bildschirm kennzeichnet, der von der Eingabevorrichtung (118) identifiziert wurde, und
3) einen ausgewählten der Algorithmen (106A-106C) benennt, der dem bezeichneten Bereich zuzuordnen ist, der von der Eingabevorrichtung (118) identifiziert worden ist.

2. Vorrichtung nach Anspruch 1,
**dadurch gekennzeichnet,**
**dass** die Vielzahl von Bildattributen Textbilddaten umfasst.

3. Vorrichtung nach einem der Ansprüche 1 bis 2,
**dadurch gekennzeichnet,**
**dass** die Vielzahl von Bildattributen Graphikbilddaten umfasst.

4. Vorrichtung nach einem der Ansprüche 1 bis 3,
**dadurch gekennzeichnet,**
**dass** die Vielzahl von Bildattributen Fotografiebilddaten umfasst.

5. Vorrichtung nach einem der Ansprüche 1 bis 4,
**dadurch gekennzeichnet,**
**dass** sie des weiteren einen Drucker umfasst, wobei die Vielzahl von Scanalgorithmen (106A-106C) auf diesen Drucker abgestimmt ist.

6. Verfahren zum Scannen einer Seite mit verschiedenen Bildattributen in verschiedenen Bereichen der Seite, wobei das Verfahren die folgenden Verfahrensschritte umfasst:
Vorsehen eines Scanners (100) mit einem eingebauten Bildzwischenspeicher (104) und einem Scannerschaltkreis (106), der eine Vielzahl von Scanalgorithmen (106A-106C) aufweist, die über optimale Darstellungskriterien für die Wiedergabe von Bildern mit einer Vielzahl von verschiedenen Bildattributen verfügen;
Scannen dieser Seite;
Schaffen eines Bildes dieser Seite auf einem Display (108);
Kennzeichnen mindestens eines Bereichs der Seite auf dem Display (108);
Abspeichern von Daten von der gescannten Seite in einem Zwischenspeicher (104), der in dem Scanner eingebaut ist, bevor die Daten dargestellt werden;
Bezeichnen eines ausgewählten auf den **gekennzeichneten** Bereich anzuwendenden Algorithmus von verschiedenen zur Verfügung stehenden Algorithmen (106A-106C);
Anwenden des benannten Algorithmus (106A-106C) auf die Daten, die in dem eingebauten Bildzwischenspeicher (104) gespeichert sind; und
Darstellen eines Bildes aus den Daten, die in dem eingebauten Bildzwischenspeicher (104) gespeichert sind.

7. Verfahren nach Anspruch 6,
**dadurch gekennzeichnet,**
**dass** die Vielzahl von Bildattributen Textbilddaten umfasst.

8. Verfahren nach einem der Ansprüche 6 bis 7,
**dadurch gekennzeichnet,**
**dass** die Vielzahl von Bildattributen Graphikbilddaten umfasst.

9. Verfahren nach einem der Ansprüche 6 bis 8
**dadurch gekennzeichnet,**
**dass** die Vielzahl von Bildattributen Fotografiebilddaten umfasst.

10. Verfahren nach Anspruch 6, das einen weiteren Verfahrensschritt umfasst:
Vorsehen eines Druckers zum Drucken des aus den Daten, die in dem eingebauten Bildzwischenspeicher (104) gespeichert sind, dargestellten Bildes, und
Abstimmen der Vielzahl von Scanalgorithmen (106A-106C) mit dem Drucker.
